# EUROPEAN PATENT APPLICATION

(11) **EP 2 290 559 A1**
(43) Date of publication of application: **02.03.2011**
(21) Application number: 10180095.1
(22) Date of filing: 03.01.2005
(51) Int. Cl.: G06F 17/30

(54) **Systems, methods, software and interfaces for integration of case law with legal briefs, litigation documents, and/or other litigation-support documents**

(30) Priority: 31.12.2003 US 533860 P
(62) Divisional of application: 05704890.2
(71) Applicant: Thomson Reuters Global Resources, 6300 Zug (CH)
(72) Inventor: Anderson, Steven B, St. Paul, MN 55117 (US)
(74) Representative: Vossius & Partner

(57) **Abstract**

The invention provides a system, method and server to retrieve litigation documents. The system comprises a caselaw database containing a plurality of judicial decision documents associated with legal disputes; a litigation database containing a plurality of litigation documents, each litigation document filed in a legal dispute associated with at least one judicial decision document; a relationship database relating at least one of the judicial decision documents of the caselaw database to one or more litigation documents of the litigation database; and a server coupled to the caselaw database, litigation database and relationship database, the server configured to: return to a client access device one or more user-interface elements associated with respective one or more of the judicial decision documents in response to a submitted legal-research query; receive from the client access device a selection of at least one judicial decision document via its associated user-interface element; determine from the relationship database at least one litigation document based on the selected at least one judicial decision document; and transmit to the client access device at least one user-interface element associated with the determined at least one litigation document configured to enable a user of the client access device to request the server to retrieve the determined at least one litigation document from the litigation database.

## Description

### Copyright Notice and Permission

A portion of this patent document contains material subject to copyright protection. The copyright owner has no objection to the facsimile reproduction by anyone of the patent document or the patent disclosure, as it appears in the Patent and Trademark Office patent files or records, but otherwise reserves all copyrights whatsoever. The following notice applies to this document: Copyright © 2003, Thomson Global Resources AG.

### Cross-Reference to Related Application

This application claims priority to U.S. provisional application 60/533,860 filed on December 31, 2003. The provisional application is incorporated herein by reference.

### Technical Field

Various embodiments of the present invention concerns information-retrieval systems, such as those that provide legal documents or other related content.

### Background

The American legal system, as well as some other legal systems around the world, relies heavily on written judicial opinions, the written pronouncements of judges, to articulate or interpret the laws governing resolution of disputes. Each judicial opinion is not only important to resolving a particular legal dispute, but also to resolving similar disputes, or cases, in the future. Because of this, judges and lawyers within our legal system are continually researching an ever-expanding body of past opinions, or case law, for the ones most relevant to resolution of new disputes.

To facilitate these searches, companies, such as West Publishing Company of St. Paul, Minnesota (doing business as Thomson West), collect and publish the judicial opinions of courts across the United States in both paper and electronic forms. Many of these opinions are published with bibliographic cites or hyperlinks to other opinions, that rely on or criticize various points of law in the opinions. The cites and hyperlinks enable researchers to find printed volumes containing the related opinions or readily access the related opinions electronically over a computer network, through the Westlaw^{™} online research system. (Westlaw is a trademark licensed to Thomson West.) The Westlaw system empowers users to search over 100 million documents.

At least one problem the present inventors recognized with this effective and highly successful system is that there are numerous other types of documents that may be of use to legal researchers that are not currently available through the same legal research system and interface. Additionally, the present inventors observed that current research systems fail to recognize that litigators and trial attorneys have different needs than transactional attorneys, including, for example, data regarding expert witnesses, court dockets, court rules, jury instructions, and court filings. To obtain this information, litigators conventionally use separate service providers or online services.

Accordingly, the present inventors have recognized a need for improvement of the information-retrieval systems for legal documents.

### Summary

To address this and other needs, the present inventors devised systems, methods, and software that facilitate the retrieval of related non-opinion legal documents in response to queries for legal opinions. One exemplary system receives caselaw queries from users and returns search results that not only include one or more relevant caselaw documents, such as a judicial opinion, but also include links for retrieving litigation documents, such as briefs and verdict summaries, related to the case-law documents. Another aspect of the exemplary system provides online interfaces with query input regions for an attorney, judge, or expert witness directories in combination with links to numerous other litigation-specific databases, creating a convenient one-stop-shop for the informational needs of litigators and trial attorneys.

### Brief Description of Drawings

- Figure 1: is a diagram of an exemplary information-retrieval system 100 corresponding to one or more embodiments of the invention;
- Figure 2: is a flowchart corresponding to one or more exemplary methods of operating system 100 and one or more embodiments of the invention;
- Figure 3: is a facsimile of an exemplary user interface 300 corresponding to one or more embodiments of the invention.
- Figure 4: is a facsimile of an exemplary user interface 400 corresponding to one or more embodiments of the invention.
- Figure 5: is a facsimile of an exemplary user interface 500 corresponding to one or more embodiments of the invention.
- Figure 6: is a facsimile of an exemplary user interface 600 corresponding to one or more embodiments of the invention.
- Figure 7: is a facsimile of an exemplary user interface 700 corresponding to one or more embodiments of the invention.

### Detailed Description of Exemplary Embodiments

This description, which references and incorporates the above-identified Figures, describes one or more specific embodiments of an invention. These embodiments, offered not to limit but only to exemplify and teach the invention, are shown and described in sufficient detail to enable those skilled in the art to implement or practice the invention. Thus, where appropriate to avoid obscuring the invention, the description may omit certain information known to those of skill in the art.

### Exemplary Information-Retrieval System

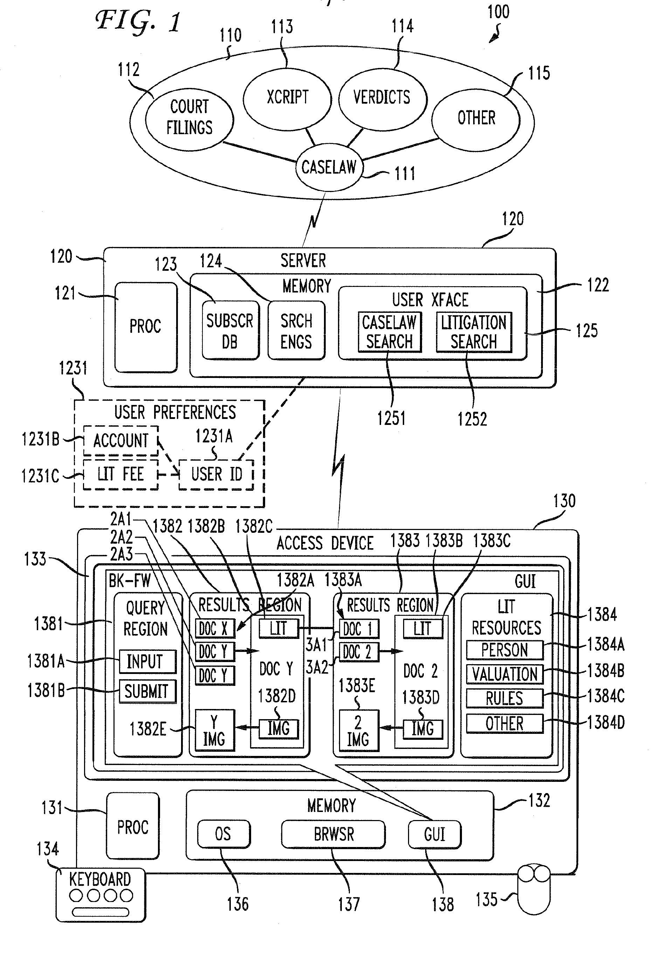

Figure 1 shows an exemplary online information-retrieval system 100. System 100 includes one or more databases 110, one or more servers 120, and one or more access devices 130.

Databases 110 include a set of one or more databases. In the exemplary embodiment, the set includes a caselaw database 111, a court filings database 112, a transcripts (XCRIPTS) database 113, a verdict and settlement database 114, and other databases 115. Caselaw database 111 generally includes electronic text and image copies of judicial opinions for decided cases for one or more local, state, federal, or international jurisdiction.

Court-filings database 112 includes electronic text and image copies of court filings related to one or more subsets of the judicial opinions caselaw database 111. Exemplary court-filing documents include briefs, motions, complaints, pleadings, discovery matter. Verdict and settlement database 114 includes electronic text and image copies of documents related to the determined verdict, assessed damages, or negotiated settlement of legal disputes associated with cases within caselaw database 111. Other databases 115 includes one or more other databases containing documents regarding news stories, business and finance, science and technology, medicine and bioinformatics, and intellectual property information. In some embodiments, the logical relationships across documents are determined manually or using automatic discovery processes that leverage information such as litigant identities, dates, jurisdictions, attorney identifies, court dockets, and so forth to determine the existence or likelihood of a relationship between any pair of documents.

Databases 110, which take the exemplary form of one or more electronic, magnetic, or optical data-storage devices, include or are otherwise associated with respective indices (not shown). Each of the indices includes terms and/or phrases in association with corresponding document addresses, identifiers, and other information for facilitating the functionality described below. Databases 112, 114, and 116 are coupled or couplable via a wireless or wireline communications network, such as a local-, wide-, private-, or virtual-private network, to server 120.

Server 120, which is generally representative of one or more servers for serving data in the form of webpages or other markup language forms with associated applets, ActiveX controls, remote-invocation objects, or other related software and data structures to service clients of various "thicknesses." More particularly, server 120 includes a processor 121, a memory 122, a subscriber database 123, one or more search engines 124 and interface module 125.

Processor 121, which is generally representative of one or more local or distributed processors or virtual machines, is coupled to memory 122. Memory 122, which takes the exemplary form of one or more electronic, magnetic, or optical data-storage devices, stores subscription database 123, search engines 124, and litigation module 127.

Subscription database 123 includes subscriber-related data for controlling, administering, and managing pay-as-you-go- or subscription-based access of databases 110. Subscriber database 123 includes subscriber-related data for controlling, administering, and managing pay-as-you-go or subscription-based access of databases 110.

In the exemplary embodiment, subscriber database 123 includes one or more data structures, of which data structure 1231 is representative. Data structure 1231 includes a customer or user identifier portion 1231A, which is logically associated with data elements or fields, such as fields 1231B, and 1231C. Field 1231B includes information identifying one or more user accounts, such as a law firm or corporate account. Field 1231C includes one or more values governing whether litigation documents are charged on a transactional or per-access basis or whether access to these documents is included within a flat-rate or other type of subscription. In some embodiments, this field may also identify, indicate, or represent a specific pricing schedule to be used in assessing access fees for litigation (pre-decision) documents.

Search engines 124 provides Boolean or natural-language search capabilities for databases 110.

User interface module 125, which, among, other things defines one or portion of a graphical user interface that helps users define searches for databases 110. Software 125 includes one or more browser-compatible applets, webpage templates, user-interface elements, objects or control features or other programmatic objects or structures. More specifically, software 125 includes a caselaw search interface 1251 and a litigation search interface 1252.

Server 120 is communicatively coupled or couplable via a wireless or wireline communications network, such as a local-, wide-, private-, or virtual-private network, to one or more accesses devices, such as access device 130.

Access device 130 is not only communicatively coupled or couplable to server 130, but also generally representative of one or more access devices. In the exemplary embodiment, access device 130 takes the form of a personal computer, workstation, personal digital assistant, mobile telephone, or any other device capable of providing an effective user interface with a server or database.

Specifically, access device 130 includes one or more processors (or processing circuits) 131, a memory 132, a display 133, a keyboard 134, and a graphical pointer or selector 135. Memory 132 stores code (machine-readable or executable instructions) for an operating system 136, a browser 137, and a graphical user interface (GUI)138. In the exemplary embodiment, operating system 136 takes the form of a version of the Microsoft Windows operating system, and browser 137 takes the form of a version of Microsoft Internet Explorer. Operating system 136 and browser 137 not only receive inputs from keyboard 134 and selector (or mouse) 135, but also support rendering of GUI 138 on display 133. Upon rendering, GUI 138 presents data in association with one or more interactive control features (or user-interface elements). (The exemplary embodiment defines one or more portions of interface 138 using applets or other programmatic objects or structures from server 120.)

Specifically, graphical user interface 138 defines or provides one or more display control regions, such as a query region 1381, a results region 1382, a court-filings (or litigation documents) region 1383, and a litigation resources region 1384. Each region (or page in some embodiments) is respectively defined in memory to display data from databases 110 and/or server 120 in combination with one or more interactive control features (elements or widgets). In the exemplary embodiment, each of these control features takes the form of a hyperlink or other browser-compatible command input. Although shown as being concurrently displayed in Figure 1, various embodiments present one or more portion of interface 138 at different times and within different windows or screens.

More specifically, query region 1381 includes interactive control features, such as an query input portion 1381A for receiving user input at least partially defining a query and a query submission button 1381B for submitting a query to server 120 for data from, for example, caselaw database 111.

Results region 1382, which displays search results for a submitted query, includes a results listing portion 1382A and a document display portion 1382B. Listing portion 1382A includes control features 2A1, 2A2, 2A3 for accessing or retrieving one or more corresponding search result documents, such as judicial opinions, from one or more of databases 110 via server 120. Each control feature includes a respective document identifier or label, such as DOC X, DOC Y, DOC Z identifying respective titles and/or citations for the corresponding documents.

Display portion 1382B displays at least a portion of the full text of a first displayed or user-selected one of the documents identified within listing portion 1382A, DOC Y in the illustration. (Some embodiments present regions 1382A and 1382B as selectable tabbed regions.) Portion 1382B also includes feature 1382C and 1382D. User selection of feature 1382C initiates display of an image copy of the document displayed in region 1382B in a separate window. User selection of feature 1382D, which is associated with the label "LIT" in the figure, causes display of court-filings region 1383 in a separate window. (In some embodiments, selection of this feature initiates a search or other process for determining all or a portion of the contents of region 1383.)

Court-filings region 1383 includes a listing portion 1383A and a document display portion 1383B. Listing portion 1383A includes control features 3A1, 3A2, 3A3 for accessing or retrieving one or more corresponding court filing documents ---for example, briefs, motions, or complaints--- from one or more of databases 110 via server 120. Each control feature includes a respective document identifier or label, such as DOC 1 or DOC 2 identifying respective titles and/or citations for the corresponding documents. Region 1382B displays at least a portion of the full text of a first displayed or user-selected one of the documents identified within listing portion 1383B, DOC 2 in the illustration. (Some embodiments present regions 1383A and 1383B as selectable tabbed regions.) In some embodiments that present region 1382B as a separate page or window, the region includes a link feature 1383C labeled "LIT" or "court filings list" to close the window and redisplay region 1383A. Region 1382B also includes an image link feature 1382D, selectable by a user to initiate display of an image copy 1383E of the document displayed in region 1383B in a separate window. In the exemplary embodiment, image copies are in portable document format (PDF.)

Litigation resources region 1384, which serves as a "one-stop shop" online interface, includes an aggregate set of control features for accessing litigation-related content or information-retrieval services, that helps legal professionals evaluate, investigate, negotiate, prepare, and present trial-case information. Specifically, region 1384 includes a professional profiler feature 1384A, a case-valuation feature 1384B, and a court-rules search feature 1384C. Profiler feature 1384A allows users to initiate a search of available professional directories and/or other sources for biographical and experiential data based on attorney, judge, or expert witness name and/or jurisdiction directly from region 1384. Similarly, case-valuation feature 1384B allows users to initiate a search for data related to valuation of litigations based on jurisdiction and injury type directly from region 1384. Other embodiments provide these and/or other features.

### Exemplary Methods of Operation

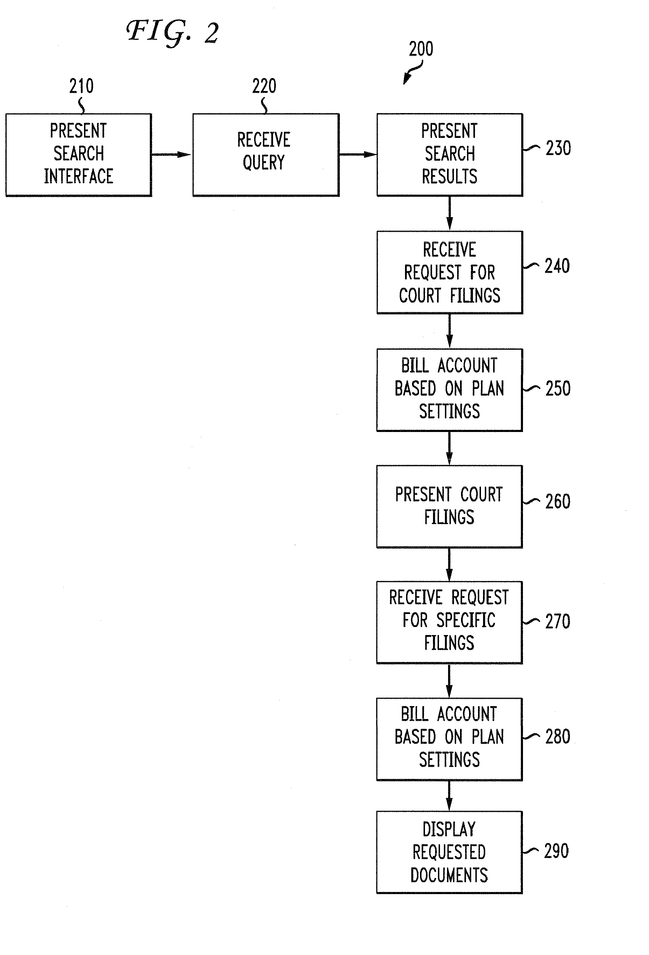

Figure 2 shows a flow chart 200 of one or more exemplary methods of operating an information-management system, such as system 100. Flow chart 200 includes blocks 210-290, which are arranged and described in a serial execution sequence in the exemplary embodiment. However, other embodiments execute two or more blocks in parallel using multiple processors or processor-like devices or a single processor organized as two or more virtual machines or sub processors. Other embodiments also alter the process sequence or provide different functional partitions to achieve analogous results. For example, some embodiments may alter the client-server allocation of functions, such that functions shown and described on the server side are implemented in whole or in part on the client side, and vice versa. Moreover, still other embodiments implement the blocks as two or more interconnected hardware modules with related control and data signals communicated between and through the modules. Thus, the exemplary process flow applies to software, hardware, and firmware implementations.

Block 210 entails presenting a search interface to a user. In the exemplary embodiment, this entails a user directing a browser in an client access device, such as access device 130, to internet-protocol (IP) address for an online information-retrieval system, such as the Westlaw system and then logging onto the system. Successful login results in a web-based search interface, such as interface 138 in Figure 1 (or one or more portions thereof) being output from server 120, stored in memory 132, and displayed by client access device 130. Execution then advances to block 220.

Block 220 entails receipt of a query. In the exemplary embodiment, the query includes a query string and/or a set of target databases, which includes one or more of the select databases. In some embodiments, the query string includes a set of terms and/or connectors; in others, it includes a natural-language string; and in still others, it includes a document citation. Also, in some embodiments, the set of target databases is defined automatically or by default based on the form of the system or search interface. Also in some embodiments, the received query may be accompanied by other information, such as information defining whether to search secondary resources. In any case, execution continues at block 230.

Block 230 entails presenting search results to the user via a graphical user interface. In the exemplary embodiment, this entails the server or components under server control or command, executing the query against the targeted set of databases and identifying documents that satisfy the query criteria, and then presenting the results as part of an interface, such as interface 138 in Figure 1. Execution proceeds to block 240.

Block 240 entails a server, such as server 120, receiving a request for court-filings related to one or more judicial opinions found in the search results. In the exemplary embodiment, this entails the user selecting a briefs or court-filings link associated with at least one of the judicial opinions shown in the search results. Execution then continues at block 250.

Block 250 entails billing an account associated with the user based on the request. In the exemplary embodiment, this entails determining whether to notify the user of additional charges for accessing court filings. The determination is made based account or subscription plan information associated with the user in subscriber database 123. If the determination is affirmative, a message, such as

The database you have requested is not included in your subscription plan.

To access [court-filing documents] at an additional charge, click OK. To cancel this request and avoid an additional charge, click Cancel. Selection of the OK or a determination that notification is not necessary, advances execution to block 260. (Direct searches of court-filings databases can also trigger operation of block 250.)

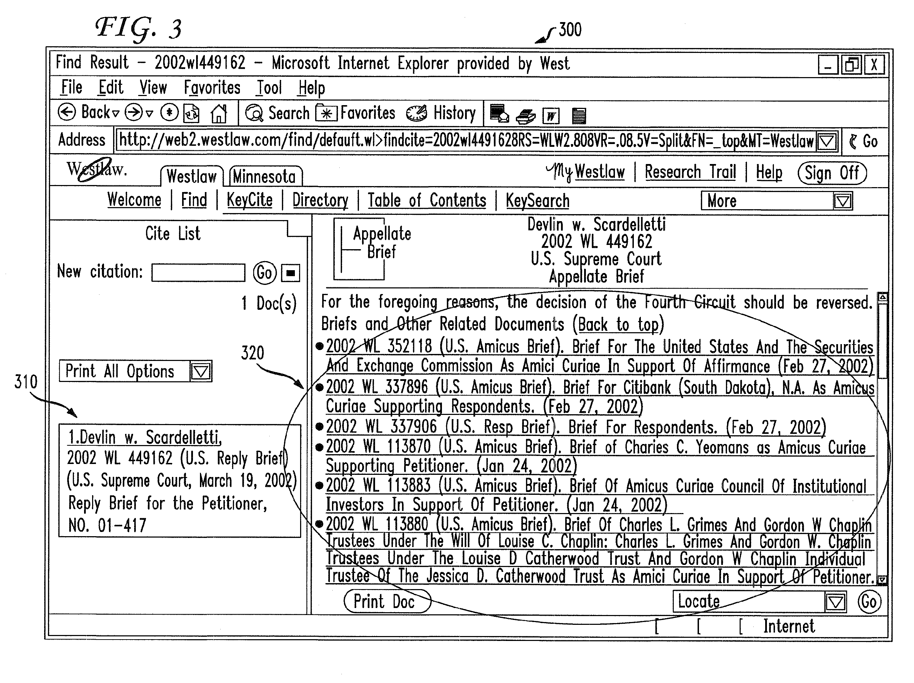

Block 260 presents a listing of available court-filing (trial or litigation) documents associated with the previously selected judicial opinion (or other search criteria.) In the exemplary embodiment, this entails displaying a listing of the results in a user interface, such as interface 138 in Figure 1 or interface 300 in Figure 3. Interface 300 includes a listing 310 of a judicial opinion that corresponds to a selected judicial opinion, and a listing 320 of available court filing documents associated directly or indirectly with the judicial opinion. Each listed document is associated with a corresponding interactive control feature, such as hyperlink, that is selectable by a user to invoke retrieval and/or display of the associated document (or a portion thereof) in the same or separate window. To determine the set of available court-filings documents, some embodiments search a metadata database based on a document identifier or other information associated with the selected judicial opinion. The metadata database relates cases based on implied as well as direct relationships. For example, requesting related litigation documents for any of cases A, B, C that share a common litigation history would result in presentation of a court-filing documents for all the common cases. Also, some embodiments append the listing of available court-filings to the selected judicial opinion.

Block 270 entails receiving a request for one or more of the listed available court-filing documents. In the exemplary embodiment, this entails a user clicking on one or more of the listed court-filings and thereby causing access device 130 to initiate or submit a request for the one or more items to server 120.

Block 280 entails billing an account associated with the user according to an associated subscription. In the exemplary embodiment, this entails determining whether to notify the user of additional charges for accessing court filings. The determination is made based on account or subscription plan information associated with the user in subscriber database 123. If the determination is affirmative, the user is notified and provided an option to cancel the request or accept charge for accessing the requested document, as described in block 250. Acceptance of the charge or a determination that notification is not necessary, advances execution to block 290.

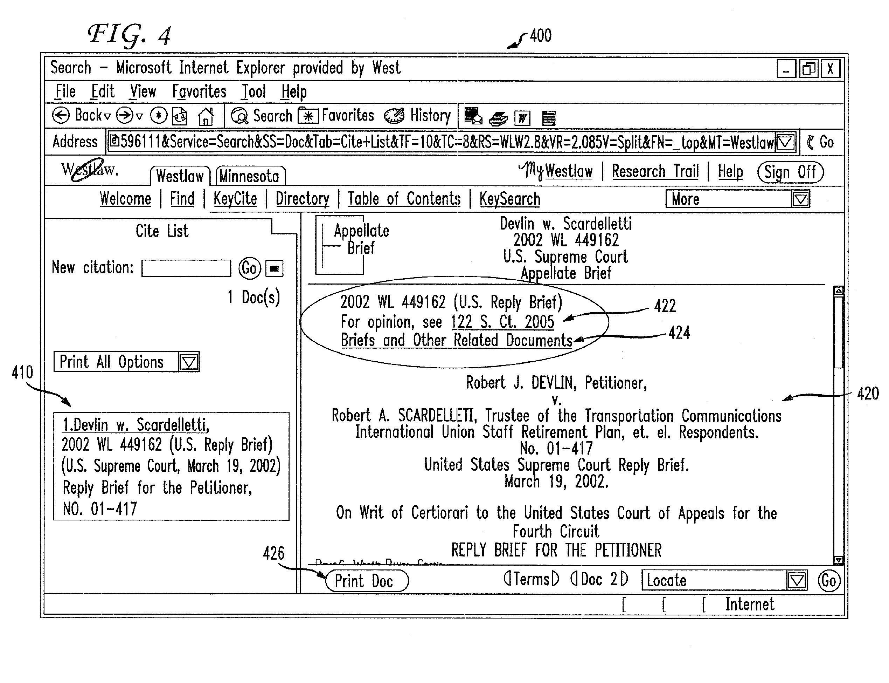

Block 290 entails presenting one or more of the requested court-filing documents. In the exemplary embodiment, this entails presenting at least one document in a user interface, such as interface 138 in Figure 1 or interface 400 in Figure 4. Interface 400 includes a listing 410 of the selected judicial opinion, and a text display region 420 showing at least a portion of the requested court-filing document. Region 420 also includes respective control features 422 and 424, for example hyperlinks, that are selectable to invoke display of the selected judicial opinion associated with the court-filing document or the listing of available court documents (as shown in interface 300).

Alternatively, the user may use the "back" button on her browser to achieve similar results. An additional control feature 426, a print button, enables users to initiate output of the court-filing document to a printer or email application.

### Exemplary Interface for Presenting Related Litigation Documents

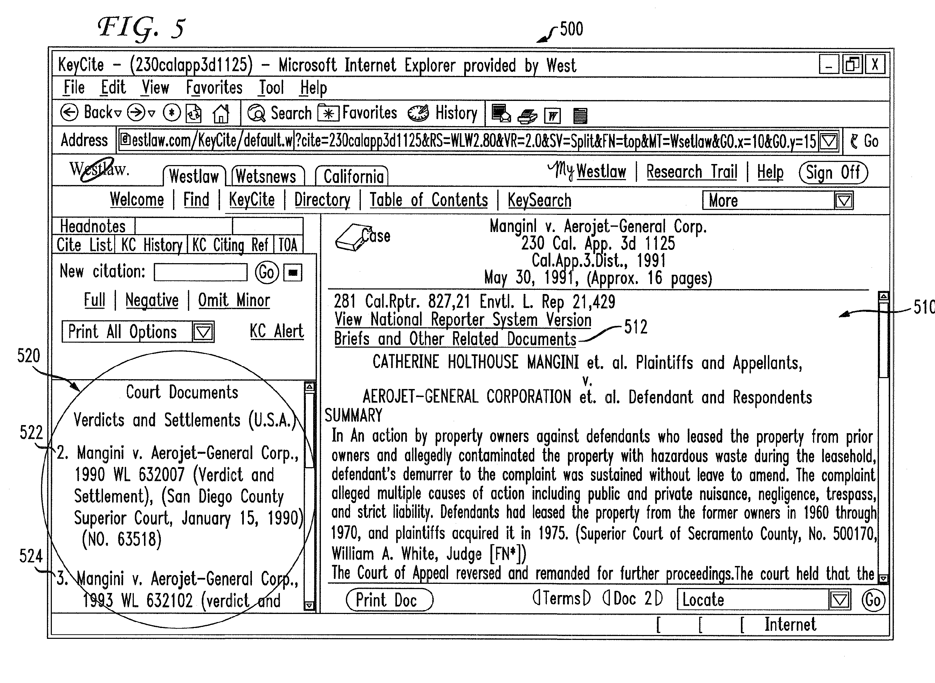

Figure 5 shows an alternative exemplary interface 500 for displaying litigation documents related to a displayed judicial opinion. Interface 500 includes a judicial opinion display region 510 and a related litigation documents listing 520. Region 510, which displays or presents text (or in some embodiments portions of an image copy) of a judicial opinion, includes a link 512 to a listing of related litigation documents and a link 514 to alternative versions of the same judicial opinions. Listing 520 includes a number of links, such as links 522 and 524, to the same or other litigation documents that are related to the judicial opinion in region 510. In the figure, links 522 and 524 point to verdict or settlement related documents.

### Exemplary Litigation Resource Interfaces

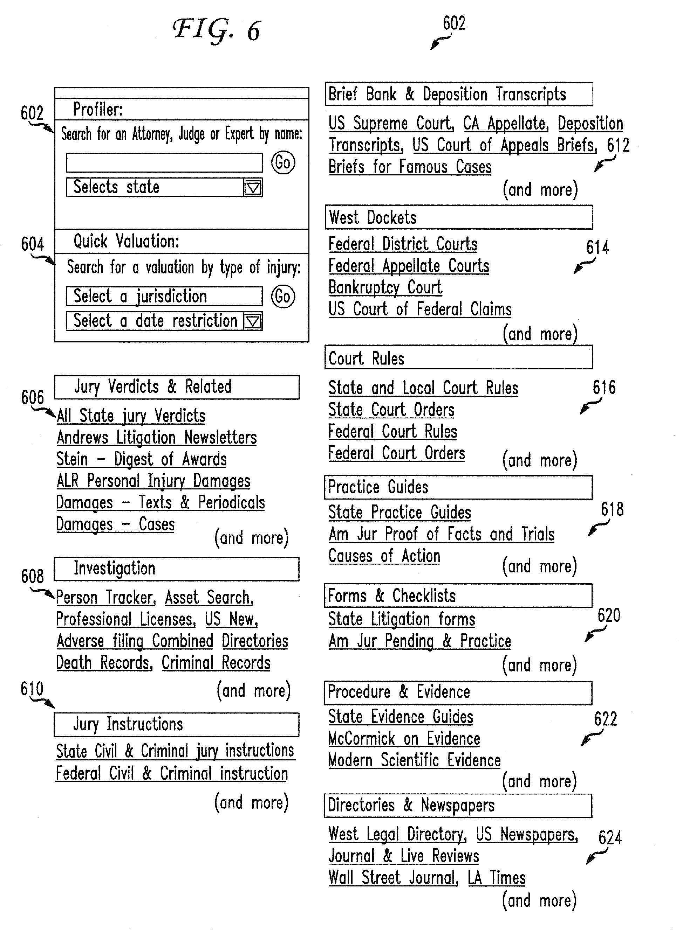

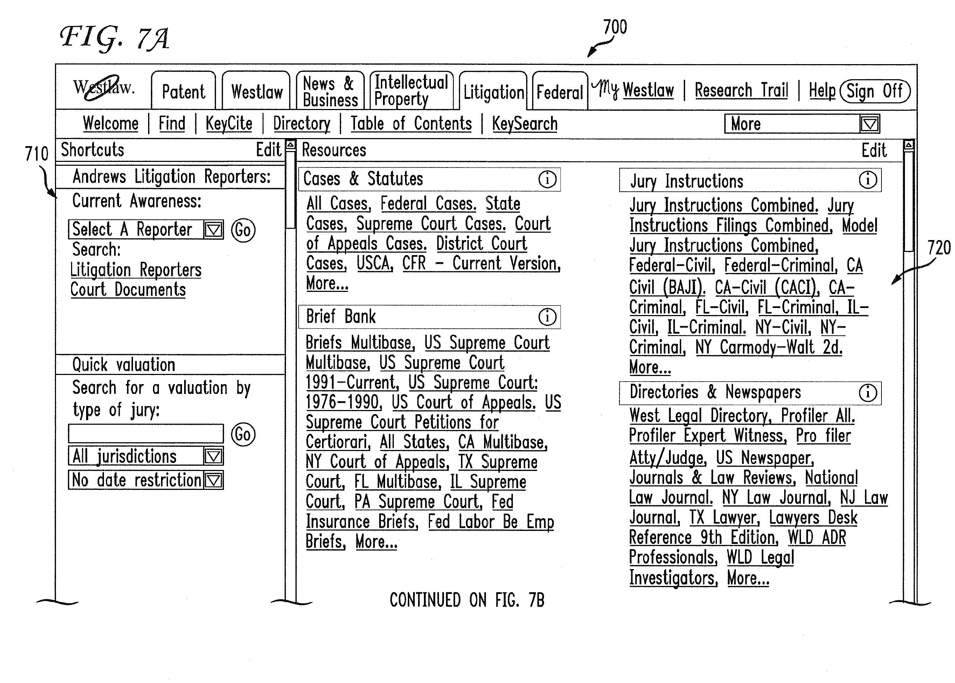

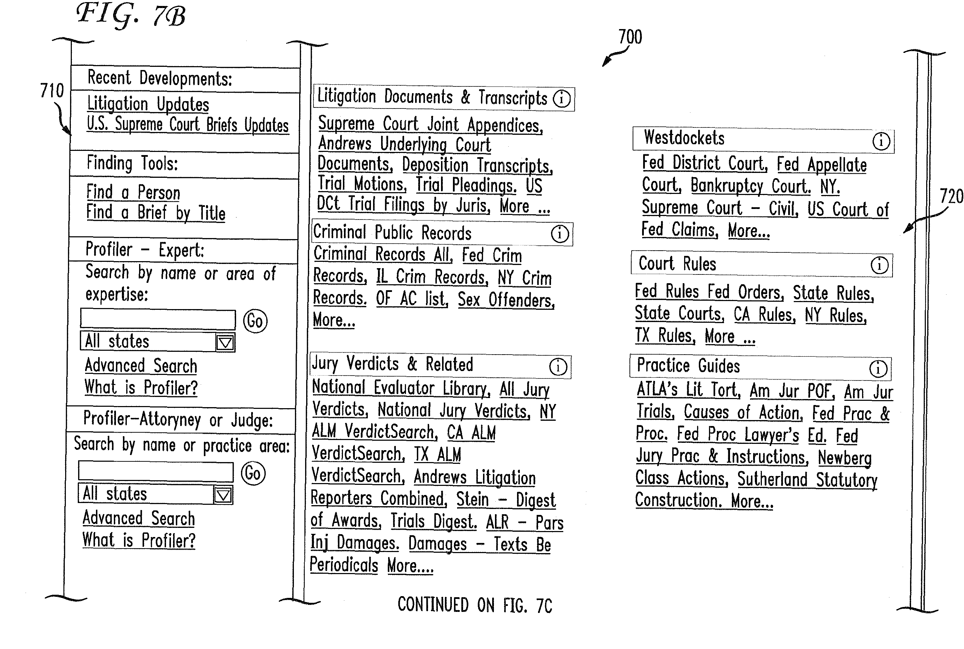

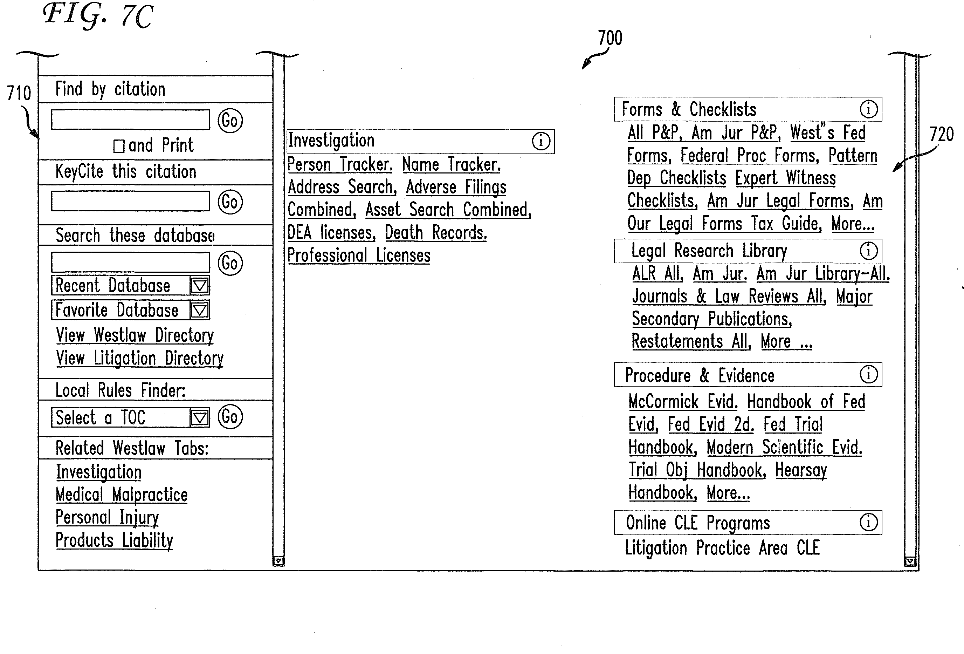

Figures 6 and 7 show respective litigation resource interfaces 600 and 700, which some embodiments use as an alternative to the litigation-resource region 1384 in Figure 1. Interface 600 includes control features for accessing content and tools related to evaluation, investigation, negotiation, trial preparation, and trial presentation.

More specifically, interface 600 includes a prafiler-query portion 602; a litigation-valuation-query region 604; a listing 606 of links to databases related to jury verdicts; a listing 608 of case-investigation databases; a listing 610 of links to jury-instruction database; a listing 612 of links to databases for briefs, depositions, or transcripts; a listing 614 of court-docket databases (or services); a listing 616 of links to court-rules databases; a listing 618 of links to databases of practice guides (or legal treatises); a listing 620 of databases containing forms and checklists; a listing 622 of databases related to procedures and evidence; and a listing 624 of professional directories and newspaper databases. Notably, selection of links within listings 606-622 invoke display of query input regions for their respective databases.

Similarly, interface 700, in Figure 7, includes a shortcut portion 710 and a database (or resource) listing portion 720. Shortcut portion 710 includes several query input regions, and listing portion 720 includes several clusters of database listings.

### Conclusion

The embodiments described above are intended only to illustrate and teach one or more ways of practicing or implementing the present invention, not to restrict its breadth or scope. The actual scope of the invention, which embraces all ways of practicing or implementing the teachings of the invention, is defined only by the following claims and their equivalents.

## Claims

1. A system to retrieve litigation documents, the system comprising:
a caselaw database containing a plurality of judicial decision documents associated with legal disputes;
a litigation database containing a plurality of litigation documents, each litigation document filed in a legal dispute associated with at least one judicial decision document;
a relationship database relating at least one of the judicial decision documents of the caselaw database to one or more litigation documents of the litigation database; and
a server coupled to the caselaw database, litigation database and relationship database, the server configured to:
return to a client access device one or more user-interface elements associated with respective one or more of the judicial decision documents in response to a submitted legal-research query;
receive from the client access device a selection of at least one judicial decision document via its associated user-interface element;
determine from the relationship database at least one litigation document based on the selected at least one judicial decision document; and
transmit to the client access device at least one user-interface element associated with the determined at least one litigation document configured to enable a user of the client access device to request the server to retrieve the determined at least one litigation document from the litigation database.

2. The system of claim 1, wherein the server is further configured to:
receive from the client access device a selection of a litigation document via its associated user-interface element;
retrieve the litigation document from the litigation database; and
transmit the retrieved litigation document to the client access device.

3. The system of claim 2, wherein the server is further configured to transmit to the client access device a user-interface element as part of the retrieved litigation document configured to enable the user of the access device in requesting the server to transmit to the client access device the selected at least one judicial decision document associated with the retrieved litigation document.

4. The system of claim 2, wherein the server is further configured to transmit to the client access device a user-interface element as part of the retrieved litigation document configured to enable the user of the access device in requesting the server to transmit to the client access device the determined at least one litigation document associated with the selected at least one judicial decision document.

5. The system of claim 1, wherein the relationship database further relates the at least one judicial decision document to at least one other judicial decision document.

6. The system of claim 5, wherein the server is further configured to:
determine from the relationship database at least one additional litigation document based on the at least one other judicial decision document; and
transmit to the client access device user-interface elements associated with the respective determined at least one litigation document and the at least one additional litigation document, the user interface elements being configured to enable a user of the access device to request the server to retrieve the determined at least one litigation document or the at least one additional litigation document the from the litigation database.

7. A method of retrieving litigation documents, the method comprising:
receiving from a client access device a legal-research query for judicial decision documents stored in a caselaw database;
returning to the client access device one or more user-interface elements associated with respective one or more of the judicial decision documents in response to the received legal-research query;
receiving from the client access device a selection of at least one judicial decision document via its associated user-interface element;
determining, from a relationship database that relates judicial decision documents to litigation documents, at least one litigation document based on the selected at least one judicial decision document; and
transmitting to the client access device at least one user-interface element associated with the determined at least one litigation document configured to enable a user of the client access device to request retrieval of the determined at least one litigation document from a litigation database.

8. The method of claim 7, wherein the method further comprises:
receiving from the client access device a selection of a litigation document via its associated user-interface element;
retrieving the litigation document from the litigation database; and
transmitting the retrieved litigation document to the client access device.

9. The method of claim 8, wherein the method further comprises transmitting to the client access device a user-interface element as part of the retrieved litigation document to enable the user of the access device in requesting transmission to the client access device of the selected at least one judicial decision document associated with the retrieved litigation document.

10. The method of claim 9, wherein the method further comprises transmitting to the client access device a user-interface element as part of the retrieved litigation document configured to enable the user of the access device in requesting the server to transmit to the client access device the determined at least one litigation document associated with the selected at least one judicial decision document.

11. The method of claim 7, wherein the method further comprises:
determining, from the relationship database that further relates the at least one judicial decision document to at least one other judicial decision document, at least one additional litigation document based on the at least one other judicial decision document; and
transmitting to the client access device user-interface elements associated with the respective determined at least one litigation document and the at least one additional litigation document, the user interface elements enabling a user of the access device to request retrieval of the determined at least one litigation document or the at least one additional litigation document from the litigation database.

12. A server to retrieve litigation documents, the server comprising: a caselaw search interface configured to:
receive from a client access device a legal-research query for judicial decision documents stored in a caselaw database;
return to the client access device one or more user-interface elements associated with respective one or more of the judicial decision documents in response to the received legal-research query; and
a litigation search interface configured to:
receive from the client access device a selection of at least one judicial decision document via its associated user-interface element;
determine, from a relationship database that relates judicial decision documents to litigation documents, at least one litigation document based on the selected at least one judicial decision document;
transmit to the client access device at least one user-interface element associated with the determined at least one litigation document configured to enable a user of the client access device to request retrieval of the determined at least one litigation document from a litigation database.

13. The server of claim 12, wherein the litigation search interface is further configured to:
receive from the client access device a selection of a litigation document via its associated user-interface element;
retrieve the litigation document from the litigation database; and
transmit the retrieved litigation document to the client access device.

14. The server of claim 13, wherein the litigation search interface is further configured to transmit to the client access device a user-interface element as part of the retrieved litigation document configured to enable the user of the access device in requesting transmission to the client access device of the selected at least one judicial decision document associated with the retrieved litigation document.

15. The server of claim 14, wherein the litigation search interface is further configured to transmit to the client access device a user-interface element as part of the retrieved litigation document configured to enable the user of the access device in requesting transmission to the client access device of the determined at least one litigation document associated with the selected at least one judicial decision document.

16. The server of claim 15, wherein the litigation search interface is further configured to:
determine, from the relationship database that further relates the at least one judicial decision document to at least one other judicial decision document, at least one additional litigation document based on the at least one other judicial decision document; and
transmit to the client access device user-interface elements associated with the respective determined at least one litigation document and the at least one additional litigation document, the user interface elements enabling a user of the access device in requesting retrieval of the determined at least one litigation document or the at least one additional litigation document from the litigation database.
